# FASCICULE DE BREVET EUROPEEN

(11) **EP 3 104 065 B1**
(45) Date de publication et mention de la délivrance du brevet: **15.03.2023**
(21) Numéro de dépôt: 16173383.7
(22) Date de dépôt: 07.06.2016
(51) Int. Cl.: F21S 43/14, F21S 43/19, F21S 43/27

(54) **DISPOSITIF DE SIGNALISATION ET/OU D'ÉCLAIRAGE D'UN VÉHICULE AUTOMOBILE**
SIGNAL- UND/ODER BELEUCHTUNGSVORRICHTUNG EINES KRAFTFAHRZEUGS
SIGNALING AND/OR LIGHTING DEVICE OF A MOTOR VEHICLE

(30) Priorité: 12.06.2015 FR 1555393
(43) Date de publication de la demande: 14.12.2016
(73) Titulaire: Valeo Vision Belgique, 7822 Meslin l'Evêque (BE)
(72) Inventeur: DEBERT, Florestan, 59310 NOMAIN (FR); SACCHET, Dirkie, 7190 ECAUSSINNES (BE); FRANC, Alexandre, 59260 LEZENNES (FR)
(74) Mandataire: Valeo Visibility

(56) Documents cités:
- DE-A1- 10 145 963
- DE-A1-102012 107 834
- JP-A- 2004 045 192
- KR-A- 20130 032 686
- US-A1- 2004 120 160
- US-A1- 2006 285 348
- US-A1- 2011 273 892

## Description

L'invention a trait au domaine des dispositifs lumineux de signalisation et/ou d'éclairage d'un véhicule automobile. Plus précisément, l'invention traite du domaine des feux arrière stop en position haute de lunette arrière de véhicule automobile.

Des dispositifs lumineux connus sont décrits dans les documents DE 102012107834, JP 2004 045192, KR 20130032686, DE 10145963, US 2011/273892, US 2004/120160 et US 2006/285348.

Pour des raisons de sécurité, un véhicule automobile est généralement doté d'un feu stop additionnel en position centrale arrière. Ainsi, lorsque le conducteur du véhicule automobile freine, ce feu s'allume et éveille l'attention des usagers routiers qui le suivent. En étant disposé en position surélevée, par exemple en partie supérieure d'une lunette arrière, ce feu stop devient visible par une file d'usagers. De la sorte, davantage d'usagers successifs sont informés du changement de vitesse du conducteur qui freine en amont. Ils peuvent donc mieux anticiper les dangers, les conditions de circulation deviennent plus sûres.

Pour améliorer sa visibilité tout en préservant le volume utile de l'habitacle du véhicule automobile, le feu stop peut être implanté de manière connue dans l'ouvrant du coffre arrière lorsque ce dernier rend la lunette arrière pivotante. Lorsque la lunette est fixe, le feu stop peut être rattaché au plafond de l'habitacle. Le feu stop s'étend verticalement depuis son support vers le bas. Il éclaire au travers de la lunette arrière du véhicule qui le reçoit, tout en restant discret dans l'habitacle.

Pour un type ou modèle de véhicule automobile donné, il est connu de développer un type de feu stop en position central arrière. Un tel dispositif comprend en général une ou plusieurs lentilles optiques associées à une ou plusieurs sources lumineuses, par exemple de type diode électroluminescente, LED. Le montage électronique comprenant les sources lumineuses est supporté en général par un circuit imprimé monté à un emplacement prédéterminé du dispositif. Il n'est en effet pas souhaitable de prévoir une pluralité de dispositifs pour différentes déclinaisons de configurations d'un même modèle de véhicule, notamment pour des raisons d'efficacité de production et de coûts de développement y associés.

Pour des raisons de réglementation notamment au niveau de l'intensité du flux perçu du feu stop, il est souvent nécessaire d'utiliser des LEDs de différents types et de puissance différente sur un même modèle de véhicule, en fonction de la configuration du véhicule. En effet, si l'opacité de la glace de la lunette arrière à une influence sur la transmission de la lumière du feu stop, il en est de même pour le rayon de courbure et l'inclinaison de la glace.

Pourtant, si différents types de LEDs sont utilisés dans une même réalisation du feu stop, il en résulte des pertes d'efficacité. Le dispositif, et notamment la lentille optique, est en général adapté à un type de LED ou de source lumineuse donné. L'utilisation d'un type de source différent, pour lequel la position de la lentille optique n'a pas été optimisée au préalable, engendre en général un comportement non optimal du dispositif.

L'invention a pour objectif de pallier à au moins un des problèmes posés par l'art antérieur.

L'invention a pour objet un dispositif de signalisation et/ou d'éclairage d'un véhicule automobile tel que défini dans la revendication 1.

Des modes de réalisation préférentiels sont définis dans les revendications dépendantes.

En utilisant les mesures selon l'invention, il devient possible de construire un type de feu stop en position centrale arrière ayant des propriétés optiques optimales pour une pluralité de types de sources de lumière, tout en utilisant la même lentille optique. La ou les lentilles optiques du dispositif définissent une distance focale fixe du dispositif. Lorsqu'une source lumineuse se situe à la distance focale par rapport à la lentille, les propriétés optiques du dispositif sont optimales. Comme des types de sources, notamment des types de LEDs différents sont des composants électroniques ayant des hauteurs différentes, l'invention prévoit un support permettant de monter différents types de LEDs par le biais de leur circuit imprimé à différentes distances prédéterminées par rapport à la lentille optique. Les distances sont avantageusement choisies de façon à ce que chaque distance correspond à un type de LED destiné à être utilisé dans le feu. Ceci veut dire que le montage d'un type de LED donné à la distance prédéterminée y associée a pour conséquence directe que la face émettrice de la LED se trouve à la distance focale de la lentille optique. Avantageusement, le support définissant les distances prédéterminées est venu de matière avec la lentille optique, ce qui assure que les distances sont invariables lors du montage du dispositif, puisqu'aucun alignement d'autres composants par rapport à la lentille n'est nécessaire.

Des premiers moyens de support du dispositif sont aptes à maintenir un circuit imprimé à une première distance, tandis que des deuxièmes moyens de support sont aptes à maintenir un circuit imprimé à une deuxième distance. Un même circuit imprimé peut présenter sur chacune de ses deux faces des moyens pour coopérer respectivement avec les premiers et les deuxièmes moyens de support du dispositif. Le même circuit imprimé peut donc être monté à deux des distances prédéterminées par le dispositif. L'une et/ou l'autre des faces du circuit imprimé peut alors être peuplée de LEDs dont la hauteur est telle que leur face émettrice se trouve à la distance focale par rapport à la lentille optique. De cette façon, le même circuit imprimé peut être utilisé pour placer deux types de LEDs différents à des positions respectivement optimales et prédéterminées par rapport à la lentille optique. Ceci est réalisé sans engendrer des frais de développement supplémentaires et notamment sans nécessiter le changement d'autres composants du feu stop, comme par exemple la lentille optique.

D'autres caractéristiques et avantages de la présente invention seront mieux compris à l'aide de la description exemplaire et des dessins parmi lesquels:
- les figures 1a et 1b représentent une vue schématique d'une coupe latérale d'un dispositif connu de l'art antérieur dans deux configurations ;
- la figure 2 représente une vue schématique d'une coupe latérale d'un dispositif, qui n'est pas selon l'invention, dans une première configuration ;
- la figure 3 représente une vue schématique d'une coupe latérale du dispositif illustré par la figure 2 dans une deuxième configuration ;
- la figure 4a représente une vue schématique d'une coupe latérale d'un dispositif selon un mode de réalisation de l'invention dans une première configuration ;
- la figure 4b représente un détail de la configuration illustrée par la figure 4a dans une vue d'en haut ;
- la figure 5a représente une vue schématique d'une coupe latérale du dispositif illustré par la figure 4a dans une deuxième configuration ;
- la figure 5b représente un détail de la configuration illustrée par la figure 5a dans une vue d'en haut ;
- la figure 6 représente une vue schématique en perspective d'un dispositif selon un mode de réalisation de l'invention dans une première configuration ;
- la figure 7 représente une vue schématique en perspective du dispositif illustré par la figure 6 dans une deuxième configuration.
- la figure 8 représente une vue schématique en perspective d'un dispositif selon un mode de réalisation de l'invention dans une première configuration ;
- la figure 9 représente une vue schématique en perspective du dispositif illustré par la figure 8 dans une deuxième configuration.

Dans la description qui suit, des numéros de référence similaires seront utilisés pour décrire des concepts similaires à travers des modes de réalisation différents de l'invention. Ainsi, les numéros 100, 200, 300, 400 décrivent un support dans trois modes de réalisation différents.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif.

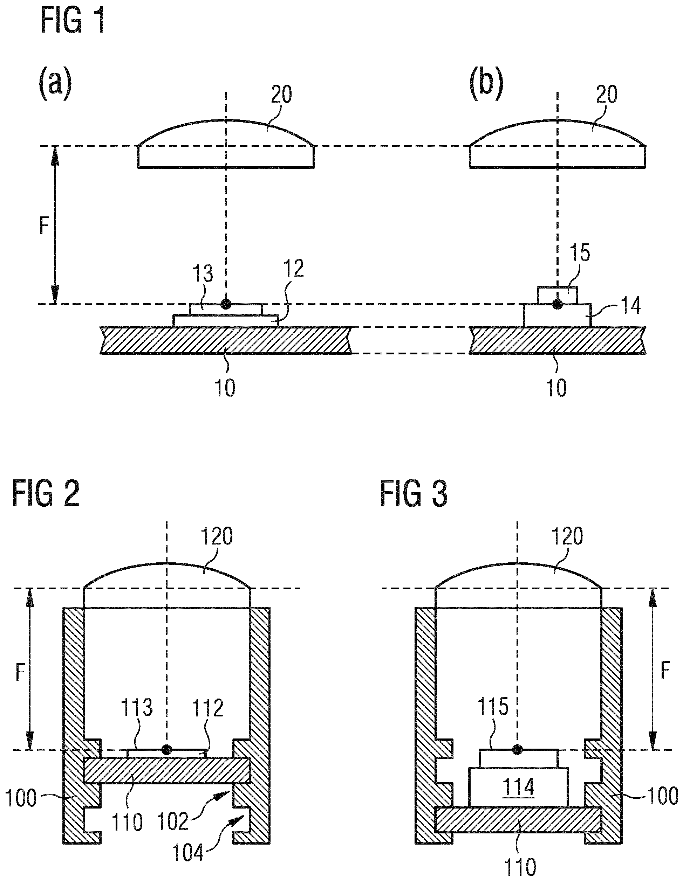

Les figures 1a et 1b montrent deux configurations d'un dispositif connu de l'art antérieur. Le dispositif de la figure 1a comprend une lentille optique 20 et un support non-illustré destiné à recevoir un circuit imprimé 10 supportant une source lumineuse 12. La source lumineuse est par exemple une diode électroluminescente, LED, sous forme d'une puce électronique, et ayant une face émettrice de lumière 13. Le support sert à maintenir le circuit imprimé à une distance prédéterminée qui est telle que la face émettrice 13 de la source 12 est située à une distance F de la lentille 20, correspondant à la distance focale de celle-ci. En plus, le support maintient le circuit 10 et la source 12 dans un plan généralement perpendiculaire à l'axe optique de la lentille. Dans la configuration de la figure 1b, le même dispositif est utilisé en montant une LED de type différent 14 sur le circuit imprimé 10. La LED 14 se caractérise par une hauteur plus importante par rapport au plan du circuit imprimé 10, comparé à la LED 12. Par conséquent, la face émettrice 15 se retrouve plus rapprochée de la lentille 20 est ne se situe pas à la distance focale F de celle-ci. De tels dispositifs sont couramment utilisés dans l'art antérieur, bien qu'ils engendrent nécessairement des performances lumineuses détériorées dans le cas de la Figure 1b.

La figure 2 montre une illustration schématique d'un mode de réalisation du dispositif lumineux, qui n'est pas selon l'invention. Le dispositif comprend un circuit imprimé 110 qui est reçu par un support 100. Le support est disposé de façon à recevoir le circuit imprimé de manière généralement perpendiculaire à l'axe optique d'une lentille optique 120, et ceci à au moins deux distances distinctes par rapport à la position de la lentille. Le circuit imprimé comprend, sur la face qui est orientée vers la lentille 120, une source lumineuse 112 qui est par exemple une diode électroluminescente, LED, ayant une surface émettrice 113. L'agencement est tel que la surface émettrice est généralement perpendiculaire à l'axe optique et que la LED 112 émet des rayons lumineux dans la direction de la lentille 120 lorsqu'elle est alimentée. Le circuit imprimé peut notamment comprendre d'autres composants électroniques, implémentant par exemple des moyens de pilotage de l'alimentation de la source lumineuse montrée. Alternativement de tels moyens peuvent être déportés par rapport au circuit imprimé et reliés à celui-ci par une connexion électrique. De manière connue des moyens de pilotage de l'alimentation de la source lumineuse permettent de convertir un courant d'une intensité donnée, fourni par exemple par une batterie du véhicule automobile équipé par le dispositif, en un courant de charge d'une intensité différente et apte à alimenter la source lumineuse. De tels moyens sont bien connus dans l'art et leur fonctionnement ne sera pas décrit dans plus de détails dans le contexte de la présente invention.

Bien que dans l'exemple montré le circuit imprimé 110 ne comprend qu'une seule source lumineuse associée à une lentille optique 120, il est évident que le circuit imprimé peut comprendre une pluralité de telles sources associées chacune à une lentille optique 120.

La lentille 120 définit une distance focale F. Les distances prédéterminées par le support 100 sont telles qu'au moins une distance de montage est prévue pour y recevoir le circuit imprimé portant la source 112, de façon à ce que la face émettrice 113 de la source se situe à la distance F par rapport à la lentille optique 120. Dans le mode de réalisation montré, le support comprend des bras qui s'étendent de manière généralement parallèle à l'axe optique de la lentille 120 de deux côtés opposés de celle-ci. Les deux bras comprennent des encoches arrangées symétriquement. Une encoche d'un bras se situe dans le même plan perpendiculaire à l'axe optique de la lentille 120 que l'encoche correspondante de l'autre bras. Les encoches d'un bras sont orientées vers celles de l'autre. Ces encoches permettent de supporter les bords du circuit imprimé 110 tel qu'illustré. Le choix de l'emplacement des encoches est fait en fonction du type de LED 112 à utiliser dans le dispositif, chaque type de LED ayant potentiellement une hauteur différente sur le circuit imprimé. Des LEDs connues dans l'art présentent par exemple des hauteurs sur circuit allant de 0.6 mm à 1.8 mm. Dans l'exemple de la figure 2, les encoches ou moyens de support 102, 104 définissent deux distances de montage du circuit imprimé 110 par rapport à la lentille 120. La première distance est adaptée à l'utilisation d'une LED d'un premier type 112. Comme illustré pas la figure 3, la deuxième distance est adaptée à l'utilisation d'une LED d'un deuxième type 114 de hauteur plus importante sur le circuit imprimé 110. Le support 100 permet le montage optimal des deux types de LED 112, 114 qui résulte dans le placement des surfaces émettrices respectives 113, 115 au niveau de la distance focale de la lentille 120, optimisant ainsi les propriétés optiques du dispositif. Il est clair que l'exemple montré peut être mis à échelle sans pour autant sortir du cadre de l'invention, par exemple en prévoyant trois distances prédéterminées ou plus.

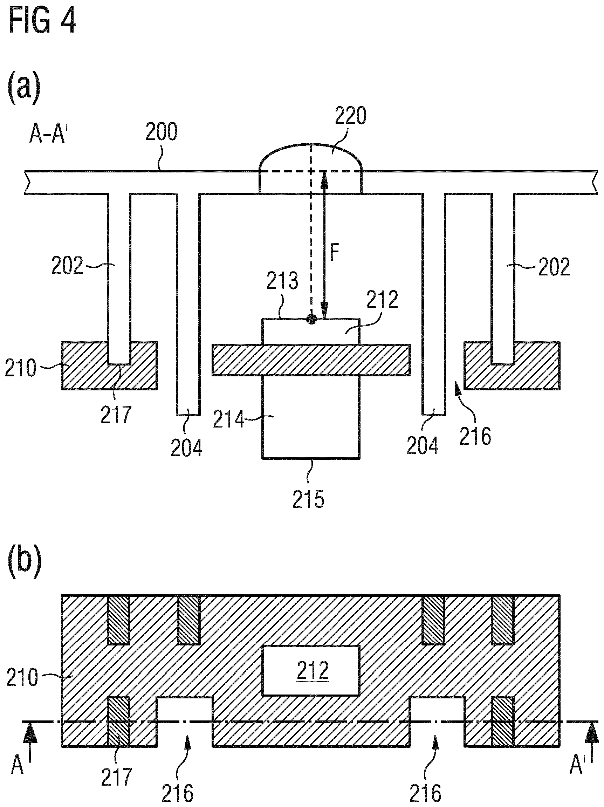

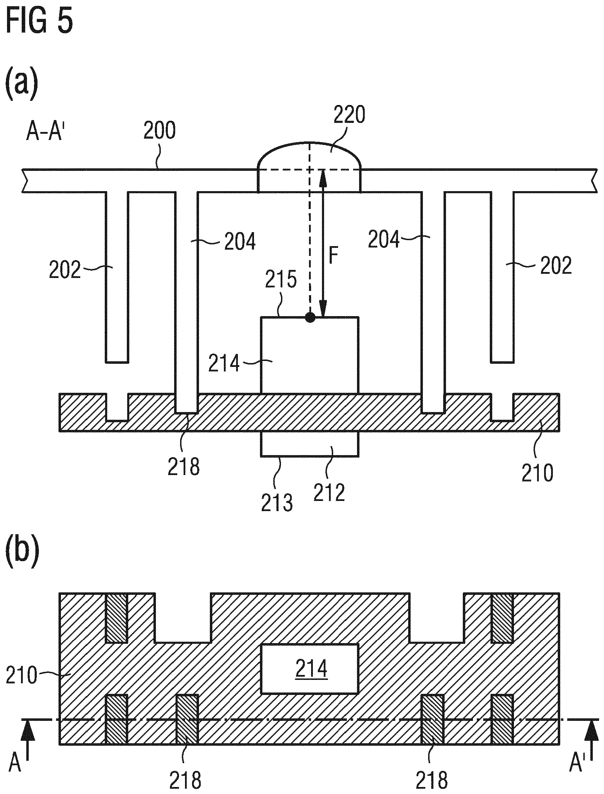

Les Figure 4 et 5 montrent un mode de réalisation du dispositif selon l'invention. Les Figure 4a et 4b illustrent une première configuration de ce dispositif. Un circuit imprimé 210 peuplé sur ses deux faces de diodes électroluminescentes 212, 214 de deux types différents est illustré. En général, il suffit que l'une ou l'autre des faces du circuit imprimé 210 soit peuplée de diodes électroluminescentes du type 212 ou 214 respectivement. Le circuit imprimé 210 présente la particularité qu'il est apte à coopérer avec les premiers moyens de support 202 du support 200 lorsque la face portant la diode 212 est orientée vers la lentille 220, et que lorsque la face opposée portant la diode 214 est orientée vers la lentille 220, il est apte à coopérer avec les deuxièmes moyens de support 204.

La distance prédéterminée par les premiers moyens de support 202 est telle que, lorsque le circuit imprimé est reçu par ces moyens, la surface émettrice 213 de la diode 212 se situe à la distance focale F par rapport à la lentille 220. Ceci est illustré par la figure 4a. La distance prédéterminée par les deuxièmes moyens de support 204 est telle que, lorsque le circuit imprimé est reçu par ces moyens, la surface émettrice 215 de la diode 213 se situe à la distance focale F par rapport à la lentille 220. Ceci est montré par la figure 5a.

Evidemment l'orientation du circuit imprimé est différente dans les deux cas, orientant soit l'une ou l'autre de ses deux faces vers la lentille.

Les moyens de support 202, 204 s'étendent en paires sous forme de bras ou de nervures de part et d'autre de la lentille 220, de manière généralement parallèle à l'axe optique de celle-ci. Les premiers moyens de support 202 s'étendent sur une distance moins importante que les deuxièmes moyens de support 204, définissant ainsi une première distance inférieure à une deuxième distance. Le circuit imprimé 210 comprend, sur sa première face portant le premier type de source 212, des encoches 217 placées de façon à coopérer avec les embouts des premiers moyens de support 202. Le circuit imprimé 210 comprend en outre des trous, encoches ou vias traversants 216, permettant aux deuxièmes moyens de support 204 de passer à travers le circuit imprimé lorsque le circuit est reçu à la première distance. Ceci est illustré par les figures 4a et 4b.

La disposition des encoches ou trous 216 est telle que, lorsque le circuit imprimé est retourné sur lui-même de façon à orienter la source lumineuse 214 vers la lentille 220, les deuxièmes moyens 204 ne peuvent pas traverser le circuit imprimé 210. En effet, des encoches 218 destinées à coopérer avec les embouts des deuxièmes moyens de support 204 sont prévus sur la deuxième face du circuit imprimé. Ceci est illustré par les figure 5a et 5b. Une implémentation possible est donnée par les figures 4 et 5. Il va de soi que, dépendant de la géométrie de moyens de support 202, 204, des encoches ou trous sont à prévoir à des endroits différents de ceux qui sont illustrés, afin de garantir le fonctionnement décrit. De telles modifications seront néanmoins à la portée de l'homme du métier et restent dans le cadre de la présente invention.

Comme illustré, le support 200 comprenant les moyens de support 202, 204 est de préférence venu de matière avec la lentille optique 220. La lentille peut par exemple être en verre, d'autres matières convenables étant connues de l'homme du métier. En intégrant le support directement à la lentille, les distances prédéterminées par rapport à la lentille ne peuvent plus être altérées par erreur, même lors de l'assemblage du dispositif.

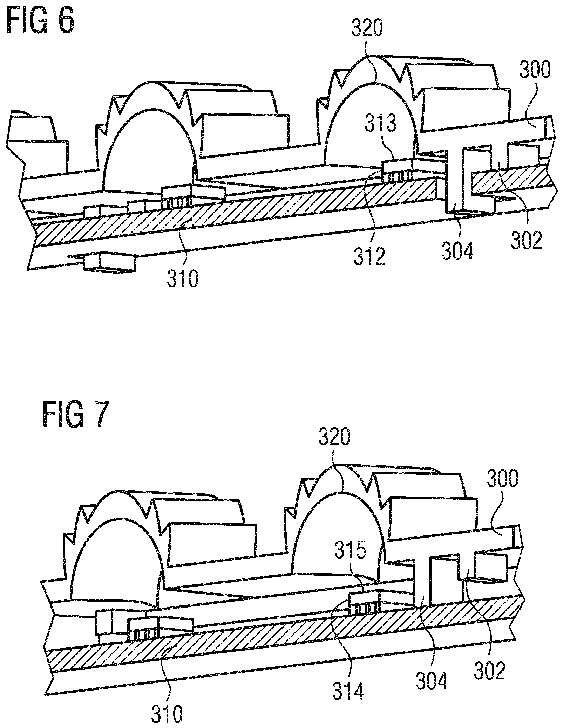

La figure 6 montre un autre mode de réalisation du dispositif selon l'invention dans une première configuration. Le principe est identique à celui qui vient d'être décrit pour les figures 4 et 5 respectivement. Un circuit imprimé 310 est supporté dans une première orientation par rapport à une lentille 320. Dans cette orientation, une première face du circuit comprenant un premier type de LED 312 est orienté vers la lentille 320. La distance entre la face émettrice 313 de la LED et la lentille 320 est prédéterminée par des premiers moyens de support 302. Le circuit imprimé comprend en outre des trous disposés de façon à permettre le passage de deuxièmes moyens de support 304, lorsque la première face du circuit imprimé est orientée vers la lentille 320.

La figure 7 reprend le dispositif de la figure 6 dans une autre configuration. Le circuit imprimé 310 est retourné sur lui-même par rapport à la configuration de la figure 6. Ainsi, la deuxième face, opposée à la première face, est orientée vers la lentille 320. Dans cette orientation, les deuxièmes moyens de support 304 ne traversent pas le circuit imprimé mais définissent la distance entre la face émettrice 315 du deuxième type de diode 314 monté sur la deuxième face du circuit imprimé 310. Les distances prédéterminées par les premiers et deuxièmes moyens de support sont telles que les faces émettrices des premiers et deuxièmes types de LEDs peuvent se situer à la distance focale fixe de la lentille 320.

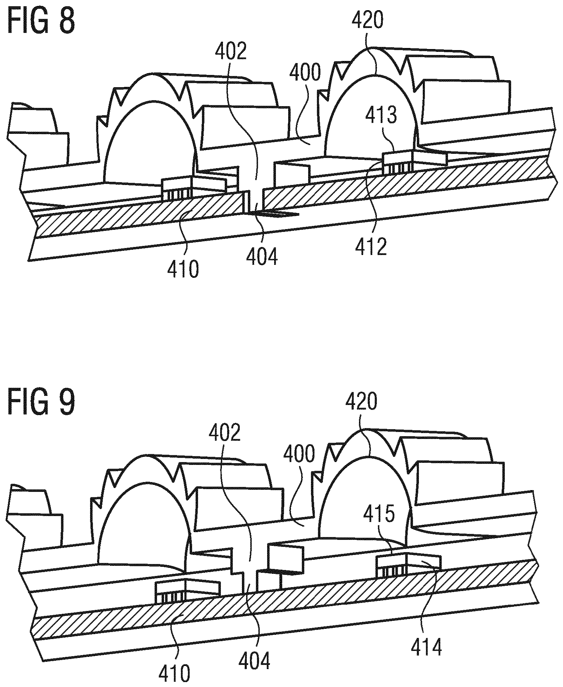

La figure 8 montre un autre mode de réalisation du dispositif selon l'invention dans une première configuration. Un circuit imprimé 410 est supporté dans une première orientation par rapport à une lentille 420. Dans cette orientation, une première face du circuit comprenant un premier type de LED 412 est orientée vers la lentille 420. La distance entre la face émettrice 413 de la LED et la lentille 420 est prédéterminée par des premiers moyens de support 402. Dans cet exemple, les premiers et deuxièmes moyens de support 402, 404 sont réalisés d'un tenant. Le circuit imprimé comprend des trous disposés de façon à permettre le passage des deuxièmes moyens de support 404, lorsque la première face du circuit imprimé est orientée vers la lentille 420. Les premiers moyens de support 402, plus larges que les deuxièmes moyens de support 404, prennent appui sur le contour des trous.

La figure 9 reprend le dispositif de la figure 8 dans une deuxième configuration. Le circuit imprimé 410 est retourné sur lui-même par rapport à la configuration de la figure 8. Ainsi, la deuxième face, opposée à la première face, est orientée vers la lentille 420. Dans cette orientation, les deuxièmes moyens de support 404 ne traversent pas le circuit imprimé mais définissent la distance entre la face émettrice 415 du deuxième type de diode 414 monté sur la deuxième face du circuit imprimé 410. Les distances prédéterminées par les premiers et deuxièmes moyens de support sont telles que les faces émettrices des premiers et deuxièmes types de LEDs peuvent se situer à la distance focale fixe de la lentille 420.

Tandis que d'autres usages du dispositif sont envisageables, le dispositif est de préférence un feu de signalisation stop pour lunette arrière d'un véhicule automobile.

## Revendications

1. Dispositif de signalisation et/ou d'éclairage d'un véhicule automobile, comprenant un circuit imprimé (210, 310, 410) reçu par un support (200, 300, 400), le circuit imprimé comprenant au moins une source lumineuse (212, 312, 412) dont une face émettrice (213, 313, 413) est orientée vers une lentille optique ( 220, 320, 420) du dispositif, la face émettrice étant généralement perpendiculaire à l'axe optique de la lentille, le support ( 200, 300, 400) permettant de recevoir le circuit imprimé ( 210, 310, 410) à au moins deux distances distinctes prédéterminées par rapport à la lentille optique ( 220, 320, 420),
- le support (200, 300, 400) comprenant des premiers moyens de support (202, 302, 402) et des deuxièmes moyens de support (204, 304, 404), destinés respectivement à recevoir le circuit imprimé (210, 310, 410) à une première distance et à une deuxième distance, supérieure à la première distance, par rapport à la lentille optique (220, 320, 420), **caractérisé en ce que**:
- le circuit imprimé comprend au moins une source lumineuse d'un premier type (212) sur une première face, et/ou au moins une source lumineuse d'un deuxième type (214) sur une deuxième face opposée, la hauteur de la face émettrice (215) d'une source lumineuse du deuxième type (214) par rapport au plan défini par le circuit imprimé (210) étant supérieure à la hauteur correspondante de la face émettrice (213) d'une source lumineuse du premier type (212),
- une première distance prédéterminée par le support (200) est telle que la face émettrice (213) de la source lumineuse du premier type (212) se situe à la distance focale de la lentille optique (220) lorsque le circuit imprimé (210) est reçu à la première distance, la première face étant orientée vers la lentille (220), et **en ce qu'**une deuxième distance prédéterminée par le support (200), supérieure à la première distance, est telle que la face émettrice (215) de la source lumineuse du deuxième type (214) se situe à la distance focale de la lentille optique (220) lorsque le circuit imprimé (210) est reçu à la deuxième distance, la deuxième face étant orientée vers la lentille (220),
- la première face du circuit imprimé (210) comprend des encoches ou évidements (217) destinés à coopérer avec les premiers moyens de support (202), et **en ce que** la deuxième face du circuit imprimé comprend des encoches ou évidements (216) destinés à coopérer avec les deuxièmes moyens de support (204), la disposition des moyens de support (202, 204) et des encoches ou évidements (216, 217, 218) du circuit imprimé est telle que, lorsque le circuit imprimé (210) est reçu à la première distance, la première face étant orientée vers la lentille (220), les deuxièmes moyens de support (204) traversent le circuit imprimé.

2. Dispositif selon la revendication 1, **caractérisé en ce que** les moyens de support (202,204 ; 302,304 ; 402,404) s'étendent de manière généralement parallèle à l'axe optique de la lentille (220, 320, 420) et sont configurés de manière à coopérer avec des encoches (217, 218) correspondantes prévues sur le circuit imprimé (210, 310, 410).

3. Dispositif selon une des revendications précédentes, **caractérisé en ce que** les sources lumineuses du premier type (212) sont destinées à émettre un flux lumineux différent des sources lumineuses du deuxième type (214).

4. Dispositif selon une des revendications précédentes, **caractérisé en ce que** la lentille optique (220, 320, 420) et le support (, 200, 300, 400) sont venus de matière.

5. Dispositif selon une des revendications précédentes, **caractérisé en ce que** les sources lumineuses comprennent un élément semi-conducteur, notamment une diode électroluminescente, LED.

6. Dispositif selon une des revendications précédentes, **caractérisé en ce que** le dispositif est un feu de signalisation stop pour lunette arrière d'un véhicule automobile.

## Patentansprüche

1. Signal- und/oder Beleuchtungsvorrichtung eines Kraftfahrzeugs, die eine Leiterplatte (210, 310, 410) beinhaltet, die von einer Stütze (200, 300, 400) aufgenommen wird, wobei die Leiterplatte mindestens eine Lichtquelle (212, 312, 412) beinhaltet, von der eine emittierende Seite (213, 313, 413) zu einer optischen Linse (220, 320, 420) der Vorrichtung ausgerichtet ist, wobei die emittierende Seite im Allgemeinen senkrecht zu der optischen Achse der Linse ist, wobei die Stütze (200, 300, 400) es gestattet, die Leiterplatte (210, 310, 410) mit mindestens zwei unterschiedlichen vorgegebenen Abständen in Bezug auf die optische Linse (220, 320, 420) aufzunehmen,
- wobei die Stütze (200, 300, 400) erste Stützmittel (202, 302, 402) und zweite Stützmittel (204, 304, 404) beinhaltet, die jeweils dazu bestimmt sind, die Leiterplatte (210, 310, 410) mit einem ersten Abstand bzw. mit einem zweiten Abstand, der größer als der erste Abstand ist, in Bezug auf die optische Linse (220, 320, 420) aufzunehmen, **dadurch gekennzeichnet, dass**:
- die Leiterplatte mindestens eine Lichtquelle eines ersten Typs (212) auf einer ersten Seite und/oder mindestens eine Lichtquelle eines zweiten Typs (214) auf einer zweiten, gegenüberliegenden Seite beinhaltet, wobei die Höhe der emittierenden Seite (215) einer Lichtquelle des zweiten Typs (214) in Bezug auf die durch die Leiterplatte (210) definierte Ebene größer ist als die entsprechende Höhe der emittierenden Seite (213) einer Lichtquelle des ersten Typs (212),
- ein erster durch die Stütze (200) vorgegebener Abstand derart ist, dass sich die emittierende Seite (213) der Lichtquelle des ersten Typs (212) im Brennweitenabstand von der optischen Linse (220) befindet, wenn die Leiterplatte (210) mit dem ersten Abstand aufgenommen ist, wobei die erste Seite zu der Linse (220) ausgerichtet ist, und dass ein zweiter durch die Stütze (200) vorgegebener Abstand, der größer als der erste Abstand ist, derart ist, dass sich die emittierende Seite (215) der Lichtquelle des zweiten Typs (214) im Brennweitenabstand der optischen Linse (220) befindet, wenn die Leiterplatte (210) mit dem zweiten Abstand aufgenommen ist, wobei die zweite Seite zu der Linse (220) ausgerichtet ist,
- die erste Seite der Leiterplatte (210) Auskerbungen oder Aussparungen (217) beinhaltet, die dazu bestimmt sind, mit den ersten Stützmitteln (202) zusammenzuwirken, und dass die zweite Seite der Leiterplatte Auskerbungen oder Aussparungen (216) beinhaltet, die dazu bestimmt sind, mit den zweiten Stützmitteln (204) zusammenzuwirken, wobei die Anordnung der Stützmittel (202, 204) und der Auskerbungen oder Aussparungen (216, 217, 218) der Leiterplatte derart ist, dass, wenn die Leiterplatte (210) mit dem ersten Abstand aufgenommen ist, wobei die erste Seite zu der Linse (220) ausgerichtet ist, die zweiten Stützmittel (204) durch die Leiterplatte hindurchgehen.

2. Vorrichtung nach Anspruch 1, **dadurch gekennzeichnet, dass** sich die Stützmittel (202, 204; 302, 304; 402, 404) im Allgemeinen parallel zu der optischen Achse der Linse (220, 320, 420) erstrecken und so konfiguriert sind, dass sie mit entsprechenden Auskerbungen (217, 218), die an der Leiterplatte (210, 310, 410) vorgesehen sind, zusammenwirken.

3. Vorrichtung nach einem der vorhergehenden Ansprüche, **dadurch gekennzeichnet, dass** die Lichtquellen des ersten Typs (212) dazu bestimmt sind, einen anderen Lichtstrom als die Lichtquellen des zweiten Typs (214) zu emittieren.

4. Vorrichtung nach einem der vorhergehenden Ansprüche, **dadurch gekennzeichnet, dass** die optische Linse (220, 320, 420) und die Stütze (200, 300, 400) einstückig ausgebildet sind.

5. Vorrichtung nach einem der vorhergehenden Ansprüche, **dadurch gekennzeichnet, dass** die Lichtquellen ein Halbleiterelement, insbesondere eine Leuchtdiode, LED, beinhalten.

6. Vorrichtung nach einem der vorhergehenden Ansprüche, **dadurch gekennzeichnet, dass** die Vorrichtung eine Bremssignalleuchte für eine Heckscheibe eines Kraftfahrzeugs ist.

## Claims

1. Signalling and/or lighting device of a motor vehicle, comprising a printed circuit (210, 310, 410) received by a support (200, 300, 400), the printed circuit comprising at least one light source (212, 312, 412), an emitting side (213, 313, 413) of which is oriented towards an optical lens (220, 320, 420) of the device, the emitting side generally being perpendicular to the optical axis of the lens, the support (200, 300, 400) making it possible to receive the printed circuit (210, 310, 410) at at least two predetermined distinct distances with respect to the optical lens (220, 320, 420),
- the support (200, 300, 400) comprising first support means (202, 302, 402) and second support means (204, 304, 404), respectively intended to receive the printed circuit (210, 310, 410) at a first distance and at a second distance, which is greater than the first distance, with respect to the optical lens (220, 320, 420), **characterized in that**:
- the printed circuit comprises at least one light source of a first type (212) on a first side, and/or at least one light source of a second type (214) on an opposite second side, the height of the emitting side (215) of a light source of the second type (214) with respect to the plane defined by the printed circuit (210) being greater than the corresponding height of the emitting side (213) of a light source of the first type (212),
- a first distance predetermined by the support (200) is such that the emitting side (213) of the light source of the first type (212) is located at the focal distance of the optical lens (220) when the printed circuit (210) is received at the first distance, the first side being oriented towards the lens (220), and **in that** a second distance predetermined by the support (200), which is greater than the first distance, is such that the emitting side (215) of the light source of the second type (214) is located at the focal distance of the optical lens (220) when the printed circuit (210) is received at the second distance, the second side being oriented towards the lens (220),
- the first side of the printed circuit (210) comprises notches or recesses (217) intended to cooperate with the first support means (202), and **in that** the second side of the printed circuit comprises notches or recesses (216) intended to cooperate with the second support means (204), the arrangement of the support means (202, 204) and of the notches or recesses (216, 217, 218) of the printed circuit is such that, when the printed circuit (210) is received at the first distance, the first side being oriented towards the lens (220), the second support means (204) pass through the printed circuit.

2. Device according to Claim 1, **characterized in that** the support means (202, 204; 302, 304; 402, 404) extend generally parallel to the optical axis of the lens (220, 320, 420) and are configured so as to cooperate with corresponding notches (217, 218) provided on the printed circuit (210, 310, 410).

3. Device according to one of the preceding claims, **characterized in that** the light sources of the first type (212) are intended to emit a different luminous flux from the light sources of the second type (214).

4. Device according to one of the preceding claims, **characterized in that** the optical lens (220, 320, 420) and the support (200, 300, 400) are formed as one piece.

5. Device according to one of the preceding claims, **characterized in that** the light sources comprise a semiconductor element, notably a light-emitting diode, LED.

6. Device according to one of the preceding claims, **characterized in that** the device is a stop light for a rear window of a motor vehicle.
